# EUROPÄISCHE PATENTSCHRIFT

(11) **EP 3 183 463 B1**
(45) Veröffentlichungstag und Bekanntmachung des Hinweises auf die Patenterteilung: **10.10.2018**
(21) Anmeldenummer: 15763826.3
(22) Anmeldetag: 05.08.2015
(51) Int. Cl.: F16D 13/58

(54) **DECKELBAUGRUPPE FÜR EINE KUPPLUNG MIT EINEM AXIAL VORGESPANNTEN DRAHTRING SOWIE KUPPLUNG MIT SOLCHER DECKELBAUGRUPPE**
COVER ASSEMBLY FOR A CLUTCH, COMPRISING AN AXIALLY PRE-STRESSED WIRE RING, AND CLUTCH COMPRISING A COVER ASSEMBLY OF THIS TYPE
ENSEMBLE COUVERCLE POUR UN EMBRAYAGE, COMPRENANT UNE COURONNE MÉTALLIQUE PRÉCONTRAINTE AXIALEMENT, ET EMBRAYAGE MUNI D'UN TEL ENSEMBLE COUVERCLE

(30) Priorität: 18.08.2014 DE 102014216315
(43) Veröffentlichungstag der Anmeldung: 28.06.2017
(73) Patentinhaber: Schaeffler Technologies AG & Co. KG, 91074 Herzogenaurach (DE)
(72) Erfinder: ROY, Joydeep, Bangalore 3756003 (JP); MANI, Ramesh, 635109 Hosur (Krishnagiri District), Tamil Nadu (IN); RENGASAMY, Rajagopal, Kovilpatti 62771 (IN)
(86) Internationale Anmeldenummer: PCT/DE2015/200436
(87) Internationale Veröffentlichungsnummer: WO 2016/026492

(56) Entgegenhaltungen:
- EP-A1- 0 211 480
- DE-A1-102012 222 269
- DE-A1-102013 216 065

## Beschreibung

Die Erfindung betrifft eine Deckelbaugruppe für eine Kupplung / Reibkupplung für ein Kraftfahrzeug, mit einem Betätigungselement, wie einer Tellerfeder, das zum In-Kontakt-Gelangen mit einer Anpressplatte vorbereitet ist, wobei das Betätigungselement über wenigstens einen Drahtring mit einem Deckel in Anlage ist.

Eine Kupplung wird in einem Antriebsstrang eines Kraftfahrzeugs üblicherweise dazu verwendet, eine Verbrennungskraftmaschine mit zumindest einem Antriebsrad zu koppeln, oder von diesem zu entkoppeln. Dazu ist die Kupplung üblicherweise zwischen einer Ausgangswelle der Verbrennungskraftmaschine, wie einer Kurbelwelle, und einer Eingangswelle eines Getriebes, das mit dem zumindest einen Antriebsrad wirkverbunden ist, vorgesehen. Mit der Kurbelwelle ist üblicherweise eine Druckplatte drehfest verbunden. Mit der Getriebeeingangswelle ist üblicherweise eine Kupplungsscheibe drehfest und axial verlagerbar verbunden. Die Kupplungsscheibe ist üblicherweise zwischen der Druckplatte und einer mit der Druckplatte drehfest und axial verlagerbar verbundenen Anpressplatte zwischengefügt. Eine Deckelbaugruppe mit einem Betätigungselement, wie einer Tellerfeder, ist üblicherweise mit der Druckplatte drehfest verbunden. Dabei ist das Betätigungselement an einem Deckel der Deckelbaugruppe so gelagert, dass das Betätigungselement die Anpressplatte in einer Axialrichtung auf die Druckplatte drücken kann. Die Axialrichtung ist die Verlagerungsrichtung der Anpressplatte. Dabei wird die Kupplungsscheibe zwischen der Druckplatte und der Anpressplatte geklemmt. Die Klemmung erzeugt eine Reibung. Somit kann eine rotatorische Leistung von der Verbrennungskraftmaschine über die Kupplung an die Antriebsräder übertragen werden.

Insbesondere für preisgünstige Kupplungen hat sich etabliert, das Betätigungselement über wenigstens einen Drahtring an dem Deckel zu lagern. Zumindest das Betätigungselement, der Drahtring und der Deckel bilden dabei eine Deckelbaugruppe.

Eine solche Kupplung ist beispielsweise aus der Offenlegungsschrift DE 1 775 113 A oder EP 0 211 480 A bekannt, welche eine Kupplung, insbesondere eine Tellerfederkupplung, betrifft, bei der die Tellerfeder zwischen zwei Abwälzauflagen schwenkbar gehalten ist, von denen mindestens eine als Drahtring ausgebildet ist und wobei die Abwälzauflagen, die Tellerfeder und der Kupplungsdeckel über Haltebolzen zu einer Einheit zusammengefasst sein können, wobei ferner als Abwälzringe Drahtringe mit offenen, aufeinander zu gerichteten Enden vorgesehen sind, die in mindestens einer deren Durchmesser entsprechenden Ausnehmung gehalten sind, welche im Bereich der axialen Längserstreckung eines der Haltebolzen vorgesehen ist.

Das Betätigungselement und der zumindest eine Drahtring werden also üblicherweise mittels eines Bolzens bzw. Haltebolzens, genauer gesagt mittels eines Anschlags über den Bolzen an dem Deckel befestigt. Jedoch unterliegt diese Befestigung mit zunehmender Fahrleistung und/oder mit zunehmender Anzahl an Betätigungen einem Lockerungsverhalten, wodurch sich ein Spiel zwischen dem Bolzenanschlag, dem Betätigungselement, dem zumindest einen Drahtring und dem Deckel einstellt. Dieses Spiel kann auch als eine Lücke, oder ein Luftspalt bzw. Luft bezeichnet werden. Dieses Spiel kann zu einer signifikanten Änderung bei einer Betätigungskraftcharakteristik der Kupplung führen. Insbesondere kann die Betätigungskraft ansteigen. Dabei bedeutet Betätigungskraft in diesem Fall die maximale, für jede Kupplungsbetätigung benötigte Betätigungskraft. Mit anderen Worten bedeutet Betätigungskraft nicht den Verlauf von Pedalkraft über Pedalweg, sondern bedeutet Betätigungskraft den Maximalwert des Verlaufs von Pedalkraft über Pedalweg. Ein solcher Betätigungskraftanstieg wird vom Fahrer gegebenenfalls nachteilig und/oder als Komforteinbuße wahrgenommen. Daher ist ein solcher Betätigungskraftanstieg nicht erwünscht.

Ferner können das Spiel in der Lagerung des Betätigungselements sowie die ansteigende (maximale) Betätigungskraft dazu führen, dass die Eigenfrequenz der Kupplung verändert bzw. verringert wird. Mit zunehmender Verringerung der Eigenfrequenz der Kupplung wird es wahrscheinlicher, dass bei einer Kupplungsbetätigung zum Anfahren des Kraftfahrzeuges, bei einer Kupplungsbetätigung zum Gangschalten bzw. zum Wechseln einer Übersetzung (in dem Getriebe) und/oder während eines Drehmomentaufbaus sich die Eigenfrequenzen bzw. das jeweilige Eigenfrequenzverhalten der Kupplung und der Getriebeeingangswelle einander annähern bzw. treffen oder überlagern. Dies kann zu einem Resonanzfall führen. Dieser Resonanzfall kann sich als "Eek-Geräusch" ("Eeknoise") bemerkbar machen. Dieses Geräusch wird auch als Quietschen oder als "Squealnoise" bezeichnet. Das Quietschen in diesem Sinne ist ein selbsterregtes und/oder instabiles Schwingungsverhalten bzw. ein selbsterregtes und/oder instabiles Geräusch. Dieses Quietschen kann vom Fahrer wahrgenommen werden, und ebenfalls als negativ bzw. als eine Komforteinbuße empfunden werden. Daher ist ein solches Quietschen unerwünscht.

Im Gebiet des Kupplungsbaus sind bereits einige Lösungen bzw. Abhilfemaßnahmen gegen ein solches Quietschgeräusch bekannt.

Diese beinhalten beispielsweise ein Einführen einer Hakenkupplung mit einer Stützfeder. Dabei wird die Tellerfeder durch eine Stützfeder abgestützt, so dass die Tellerfeder kein Spiel erfährt. Dies ist jedoch teuer, da die Stützfeder ein separates Teil ist, da spezielle Materialien, beispielsweise mit einer hohen Elastizität, benötigt sind, und/oder da die Konstruktion wegen geometrischer Randbedingungen aufwändiger wird.

Ebenfalls bekannt ist es, eine Kupplung vom Bolzentyp einzuführen, wobei der Bolzen durch ein "Schlüsselloch" in dem Deckel durch diesen hindurch ragt und getriebeseitig des Deckels mit einer Federvorspannung beaufschlagt wird. Diese Lösung ist ebenfalls teuer, da dafür ein aufwändigeres Deckelwerkzeug nötig ist, da zusätzliche Bolzen nötig sind, und/oder da beispielsweise geschweißte Drahtringe benötigt sind.

Man könnte auch eine Kupplungsscheibe mit beidseitiger Belagsfederung einsetzen. Auch eine solche Kupplungsscheibe ist wegen der zusätzlichen Teile teuer.

Des Weiteren könnte man eine Versatzausgleichsscheibe implementieren. Diese ist besser unter dem englischen Fachbegriff "mis-alignment compensation disc" bzw. "mis-alignment disc" oder kurz "MAD" bekannt. Dies stellt eine aufwändige und teure Lösung dar, welche üblicherweise in Verbindung mit einem Zweimassenschwungrad Anwendung findet, und ist daher für kostengünstige Kraftfahrzeuge mit Einmassenschwungrädern unüblich. Des Weiteren werden für Einmassenschwungräder häufig Kupplungsscheiben mit integriertem Drehschwingungsdämpfer verwendet, wobei die Kombination von integriertem Drehschwingungsdämpfer und Versatzausgleichsscheibe sehr aufwändig und teuer ist.

Eine andere Lösung wäre, ein Pilotlager einzuführen. So könnte beispielsweise die Kupplungseingangswelle mittels eines Pilotlagers an der Kurbelwelle gelagert werden. Dies würde die Resonanzfrequenz der Getriebeeingangswelle verändern. Jedoch wären hierfür Änderungen an der Getriebeeingangswelle, an der Kurbelwelle sowie im Inneren der gesamten Kupplung notwendig. Daher wäre auch dies eine teure Lösung und für kostengünstige Kraftfahrzeuge wenig geeignet.

Als letztes Beispiel sei genannt, dass die Eingangswellengeometrie durch gezieltes Einführen einer Anisotropie modifiziert werden könnte, um die Eigenfrequenz der Eingangswelle zu stören bzw. zu verändern und/oder die Schwingungsmoden der Eingangswelle zu stören bzw. zu verändern. Beispielsweise könnte eine Verzahnung, wie eine Keilwellenverzahnung, an der Schnittstelle zwischen Kupplungsscheibe und Eingangswelle durch Weglassen eines oder mehrerer Zähne verändert werden. Eine solche Anisotropie würde jedoch nicht nur das Risiko beherbergen, wegen einem geänderten Spannungsverlauf zu einer erhöhten Kerbwirkung zu führen, sondern könnte beispielsweise zu erhöhten Kosten wegen einem geänderten Herstellungswerkzeug oder zu einer erhöhten Eingangswellenmasse führen. Somit wäre auch das Einbringen einer Anisotropie mit zusätzlichen Kosten verbunden.

Zusammenfassend sind die bekannten Lösungen für kostengünstige Kraftfahrzeuge nicht bzw. nur sehr bedingt geeignet.

Es ist daher eine Aufgabe der Erfindung, eine Deckelbaugruppe vorzusehen, welche eine gleichbleibende maximale Betätigungskraft begünstigt. Es ist ferner eine Aufgabe der vorliegenden Erfindung, eine Deckelbaugruppe vorzusehen, welche ein verbessertes Geräuschverhalten aufweist. Es ist eine weitere Aufgabe der vorliegenden Erfindung, eine kostengünstige Deckelbaugruppe vorzusehen. Des Weiteren ist eine Aufgabe der Erfindung, eine Kupplung mit einer solchen Deckelbaugruppe vorzusehen. Die Aufgaben der Erfindung sind alle gleichwertig, insofern kann man als eine gemeinsame, gleichsam übergeordnete Aufgabe formulieren, eine Deckelbaugruppe bzw. eine Kupplung mit einer solchen Deckelbaugruppe zu verbessern.

Die Aufgabe der Erfindung wird erfindungsgemäß gelöst durch eine Deckelbaugruppe gemäß Patentanspruch 1 für eine Kupplung für ein Kraftfahrzeug, mit einem Betätigungselement, wie einer Tellerfeder, das zum In-Kontakt-Gelangen mit einer Anpressplatte vorbereitet ist, wobei das Betätigungselement über wenigstens einen Drahtring mit einem Deckel in Anlage ist, wobei zumindest ein Federelement, dessen Querschnitt im entspannten Zustand im Wesentlichen V-förmig und im vorgespannten Zustand im Wesentlichen C-förmig ist, zur Vorspannung des Drahtrings in axialer Richtung auf dem Drahtring aufliegt derart, dass während der Vorspannung Schenkel des im Wesentlichen V-förmigen Querschnitts bei der Überführung in den im Wesentlichen C-förmigen Querschnitt an einer Mantelfläche des Drahtrings entlang gleiten.

Dadurch wird das Lockern des Drahtrings auch bei zunehmender Fahrleistung und/oder zunehmender Anzahl an Kupplungsbetätigungen zuverlässig verhindert. Dies ermöglicht vorteilhafterweise, eine gleichbleibende maximale Betätigungskraft. Dies ermöglicht ferner, ein Quietschen zuverlässig zu verhindern. Eine Vorspannung kann ferner vorteilhafterweise sehr kostengünstig realisiert werden. Das Federelement kann auch als Vorlastelement oder Vorspannelement bezeichnet werden.

Vorteilhafte Ausführungsformen sind in den Unteransprüchen beansprucht und werden nachfolgend erläutert. Die dort genannten Aspekte können auch einzeln, unabhängig voneinander und vom Hauptaspekt weiterverfolgt werden.

So ist es vorteilhaft, wenn das Federelement an einer dem Betätigungselement zugewandten Seite des Drahtrings vorgesehen ist. Dadurch kann der Drahtring als (fast) ununterbrochenes Teil eine stabile Anlage an den Deckel, der ein unterbrochenes Teil sein kann, gewährleisten. Dies ist vorteilhaft, da hierdurch eine gleichbleibende maximale Betätigungskraft und somit ein verbessertes Geräuschverhalten erreichbar ist.

Ferner kann ebenfalls vorteilhafterweise vorgesehen sein, dass das Federelement an einer dem Betätigungselement abgewandten Spiel des Drahtrings vorgesehen ist. Dadurch kann eine durch den Drahtring erreichte / ermöglichte Abwälzgeometrie beibehalten werden. Dies kann vorteilhafterweise dazu führen, dass die maximale Betätigungskraft sich nicht erhöht. Dies kann daher auch ein Geräuschverhalten verbessern.

Kostengünstig und somit vorteilhafterweise kann vorgesehen sein, dass das Federelement diskontinuierlich gebogen ist. Unter diskontinuierlich gebogen wird insbesondere eine gekantete Geometrie verstanden. Hierfür ist lediglich ein geringer Herstellungsaufwand, beispielsweise ein einzelner Umformschritt, notwendig. Somit können Herstellungskosten eingespart werden.

Es kann ferner vorgesehen sein, dass das Federelement kontinuierlich gebogen verformbar ist. Dadurch kann sich das Federelement an ein mit der Fahrleistung bzw. der Anzahl an Betätigungen zunehmendes Spiel anpassen. Hierdurch kann in vorteilhafter Weise eine gleichbleibende maximale Betätigungskraft und (daher) ein verbessertes Geräuschverhalten erreicht werden.

Weiterbildend kann vorgesehen sein, dass das Federelement elastisch oder rein elastisch verformbar ist. Hierdurch kann jeweils eine nochmals verbesserte Anpassung an mit der Fahrleistung bzw. der Anzahl an Betätigungen zunehmendes Spiel erreicht werden. Es kann in vorteilhafter Weise eine dauerhafter gleichbleibende maximale Betätigungskraft und (daher) ein verbessertes Geräuschverhalten erreicht werden.

Es kann ferner vorgesehen sein, dass an dem Deckel ein Haltebauteil gebildet ist, welches das Betätigungselement, den Drahtring und das Federelement anpressplattenseitig in axialer Richtung an dem Deckel fixiert. Dies ist vorteilhaft, weil hierdurch ebenfalls eine gleichbleibende maximale Betätigungskraft und daher ein verbessertes Geräuschverhalten erreicht werden kann.

Es kann vorgesehen sein, dass das Halteteil ein Bolzen ist. Der Bolzen kann einen Halteabschnitt haben. Der Halteabschnitt kann als Bolzenkopf, als Nietkopf oder als separates Teil ausgeführt sein. Der Bolzen kann mit dem Deckel verschweiß, verklebt, verschraubt oder vernietet sein. Ferner kann für den Bolzen am Deckel und/oder für das Halteteil am Bolzen jede formschlüssige, kraftschlüssige, fügende oder umformende Fertigungstechnik verwendet werden. Ein solcher Bolzen kann kostengünstig verwendet werden, um beispielsweise unterschiedliche Konfigurationen, beispielsweise unterschiedliche Drahtring-Dicken oder -Profile oder Tellerfedern oder Anzahlen an Drahtringen, mit einem standardisierten Deckel zu verwenden.

Es kann ferner vorgesehen sein, dass das Halteteil mittels Blechumformung einstückig aus dem Deckel gebildet ist. Hierdurch kann ein Bolzen eingespart werden. Dies ist folglich vorteilhafterweise insbesondere bei umformend hergestellten Deckeln kostengünstig.

Es kann ferner, auch unabhängig beanspruchbar, vorgesehen sein, dass das Federelement durch Umformen des Halteteils vorgespannt ist. Es kann also mit einem Fertigungsschritt, nämlich dem Umformen, sowohl das Halteteil gebildet oder fertig gebildet werden, wie auch die Vorspannung aufgebracht werden. Somit kann ein Herstellungsschritt eingespart werden, dies ist vorteilhafterweise kostengünstig.

Dabei kann insbesondere vorgesehen sein, ein distales Ende des Halteteil zu der Seite des Halteteils hin umzuformen, beispielsweise J-förmig oder L-förmig umzuformen, an welcher der zumindest eine Drahtring und das Federelement sowie gegebenenfalls die Tellerfeder und/oder ein radial außen oder innen gebildeter Kraftrand der Tellerfeder an dem Halteteil anliegen. Dadurch kann die Vorspannung durch die Umformung dauerhaft und/oder permanent aufrecht erhalten werden, so dass die gleichbleibende maximale Betätigungskraft und das verbesserte Geräuschverhalten dauerhaft und/oder permanent verbessert sind.

Es kann darüber hinaus vorgesehen sein, dass der Drahtring und ein zweiter Drahtring ein Schwenklager des Betätigungselements bilden. Hierdurch kann ebenfalls in vorteilhafter Weise eine gleichbleibende hohe Betätigungskraft erreicht werden.

Weiterbildend kann vorgesehen sein, dass das Halteteil mittels Blechumformung einstückig aus dem Deckel gebildet ist, wobei das Federelement durch Umformen des Halteteils vorgespannt ist. Dadurch kann mit einem herstellenden Umformschritt auch die Vorspannung des Federelements erzeugt werden. Somit lässt sich ein Herstellungsschritt einsparen, dies ist in vorteilhafter Weise kostengünstig.

Es kann ferner vorgesehen sein, dass in Umfangsrichtung mehrere Federelemente verteilt sind, welche sich jeweils über einen Winkel zwischen näherungsweise 90° und näherungsweise 180° erstrecken. Darüber hinaus kann vorgesehen sein, dass auch Federelemente verwendet werden, welche sich über einen Winkel von 100°, 110°, 120°, 130°, 140°, 150° oder 160° erstrecken. Es kann vorzugsweise vorgesehen sein, dass in Umfangsrichtung vier Federelemente verteilt sind, welche sich jeweils über einen Winkel von näherungsweise 90° erstrecken. Es kann ebenso vorzugsweise vorgesehen sein, dass in Umfangsrichtung drei Federelement verteilt sind, welche sich jeweils über einen Winkel von näherungsweise 120° erstrecken. Es kann genauso gut vorzugsweise vorgesehen sein, dass in Umfangsrichtung zwei Federelemente verteilt sind, welches sich jeweils über einen Winkel von näherungsweise 180° erstrecken. Durch Vorsehen mehrerer, über den Umfang verteilter Federelemente kann eine über den Umfang nicht gleichmäßige Lockerung in vorteilhafter Weise vorspannend kompensiert werden. Dabei kann auch vorgesehen sein, dass mehrere Federelemente in Umfangsrichtung verteilt sind, welche sich über voneinander unterschiedliche bzw. zueinander unterschiedliche Winkel erstrecken. Dadurch kann eine Anisotropie der Federelemente erreicht werden. Dadurch kann in besonders zuverlässiger Weise eine Geräuschentwicklung verhindert werden. Hierbei soll "näherungsweise" bedeuten, dass die Federelemente geringfügig kleiner als der Nennwinkel bis gleich dem Nennwinkel gebildet sind, beispielsweise 1° kleiner oder als Kreisring mit einer Spielpassung zusammengesetzt, um eine einfache Montage zu gewährleisten, damit Zeit und Geld gespart werden können.

Vorteilhaft wäre auch, ein Federnpaket, also in Axialrichtung mehr als ein Federelement, zu verwenden. Dabei sollen sowohl eine Federparallelschaltung (höhere Federkraft bei annähernd gleichem Federweg), eine Federreihenschaltung (annähernd gleiche Federkraft bei größerem Federweg) oder eine Kombination daraus, bspw. eine effektiv progressive, lineare oder degressive Federkennlinie bedacht sein. Dies hat den Vorteil, dass mit einem standardisierten Federelement verschiedene Konfigurationen kombinierbar sind, so dass letztlich eine Lagerhaltung vereinfacht ist und vorteilhafterweise Kosten eingespart werden könne. Es kann dabei auch unabhängig beanspruchbar sein, dass anstelle eines Drahtrings ein solches Federnpaket zum Einsatz kommt, um die Kosten für den Drahtring bei gleichzeitig verbessertem Geräuschverhalten und gleichbleibend hoher Betätigungskraft zu sparen.

Es kann ferner aufgabengemäß eine Kupplung mit einer Deckelbaugruppe nach einem der vorangehenden Aspekte, sowie mit einer Druckplatte, einer axial verlagerbaren Kupplungsscheibe und einer Anpressplatte, die zum Klemmen der Kupplungsscheibe mit der Druckplatte durch das Betätigungselement axial verlagerbar ist, vorgesehen sein. Eine solche Kupplung hat die Vorteile der voranstehend genannten jeweiligen Aspekte.

Die erfindungsgemäße Kupplung soll nicht einschränkend bzw. abschließend verstanden werden. Als Kupplung kann eine Einscheibenkupplung, eine Mehrscheibenkupplung (üblich bei hohen Drehmomenten wie im Güterverkehr), eine Lamellenkupplung oder eine Doppelkupplung verwendet werden. Es kann wahlweise eine selbstschließende oder eine selbstöffnende Kupplung durch die erfindungsgemäße Lehre verbessert sein.

Es wird also, mit anderen Worten formuliert, eine Deckelbaugruppe für eine Kupplung und eine Kupplung mit einer solchen Deckelbaugruppe vorgeschlagen, welche den voranstehenden Randbedingungen genügt und Kundenanforderungen hinsichtlich geringer Kosten besser erfüllt als die voranstehend genannten alternativen Lösungen. Dabei ist es das (nicht ausschließliche) Ziel, eine sehr kostengünstige Kupplung für Kraftfahrzeuge aus dem Niedrigpreis- oder Mittelpreissegment vorzuschlagen, welches sowohl die funktionalen als auch die komfortbedingten Anforderungen an ein solches Fahrzeug erfüllt. Dabei hat die vorgeschlagene Lösung den Vorteil, leicht in existierende Gestaltungen integriert zu werden, so dass keine oder nur geringe zusätzliche Investitionen für den Deckel oder andere Teile anfallen. Es kann eine flexible Gestaltung erreicht werden, welche es gestattet, mit sehr geringen Modifikationen die Kundenanforderungen mit einem für eine Serienproduktion geeigneten Teil zu erfüllen. Das Federelement kann ohne Änderungen oder nur mit geringen Änderungen in bereits existierende Kupplungsbauformen mit vorgegebenen bauräumlichen Anforderungen integriert bzw. eingeführt werden. Das Federelement soll das Lockern des Anschlags bzw. das Lockern von Anschlag, Betätigungselement und zumindest einem Drahtring vermeiden. Insbesondere vermeidet das Federelement ein sich nach einer gewissen Fahrleistung ansonsten einstellendes Spiel. Somit wird die Wahrscheinlichkeit des Auftretens des Quietschphänomens reduziert. Das Federelement ist für alle Arten an Kupplungen geeignet.

Man könnte auch formulieren, dass mit der Erfindung eine Deckelbaugruppe für eine Kupplung bzw. eine Kupplung mit einer solchen Deckelbaugruppe vor allem für Low-Cost-Kupplungen bzw. kostengünstige Kupplungen vorgeschlagen wird. Hierbei wird eine Vorspannung auf zumindest einen Drahtring in axialer Richtung, das heißt in Verlagerungsrichtung, erhöht. Somit wird ein Kupplungsverschleiß ausgeglichen und/oder wird ein Quietschgeräusch verhindert. Dazu wird ein Blechring/Federstahlring mit einem C-Profil oder einem V-Profil im Bereich der Schwenklagerung zwischen dem Drahtring und einem Kupplungsdeckel und/oder zwischen dem Drahtring und einer Tellerfeder und/oder zwischen dem Drahtring und einem deckelseitigen Haken bzw. deckelseitigen Anschlag bzw. deckelseitigen Tellerfederbolzen vorgesehen. Die Erfindung betrifft somit das Gebiet einer Bolzenkupplung, einer bolzenlosen Kupplung, einer Laschenkupplung, einer Schwenklagerung, einer Tellerfeder, eines Drahtrings sowie das technische Gebiet von Kupplungsgeräuschen.

Die Erfindung wird nachfolgend mit Hilfe zweier Ausführungsformen näher beschrieben. Es zeigen:
Fig. 1 eine (Längs-)Schnittdarstellung parallel zu einer Axialrichtung durch eine Deckelbaugruppe gemäß einer ersten Ausführungsform der Erfindung vor einem umformendem Herstellungsschritt,
Fig. 2 eine (Längs-)Schnittdarstellung parallel zu der Axialrichtung durch die Deckelbaugruppe von Fig. 1 nach dem umformenden Herstellungsschritt, sowie mit einer Anpressplatte,
Fig. 3 eine perspektivische, teilweise ausgebrochene Darstellung der Deckelbaugruppe von Fig. 2,
Fig. 4 das Federelement von Fig. 1 in einer Draufsicht,
Fig. 5 das Federelement von Fig. 4 an der mit V gekennzeichneten Stelle in einer quer geschnittenen Ansicht,
Fig. 6 eine (Längs-)Schnittdarstellung parallel zu einer Axialrichtung durch eine Deckelbaugruppe gemäß einer zweiten Ausführungsform der Erfindung vor einem umformenden Herstellungsschritt,
Fig. 7 eine (Längs-)Schnittdarstellung parallel zu der Axialrichtung durch die Deckelbaugruppe von Fig. 6 nach dem umformenden Herstellungsschritt, sowie mit einer Anpressplatte, und
Fig. 8 eine perspektivische, teilweise ausgebrochene Darstellung der Deckelbaugruppe von Fig. 7.

Die Figuren sind lediglich schematischer Natur und dienen nur dem Verständnis der Erfindung. Die gleichen Elemente bzw. vergleichbare Elemente sind mit denselben Bezugszeichen versehen. Merkmale der einen Ausführungsform können auch in der anderen Ausführungsform enthalten sein. Sie sind also untereinander austauschbar.

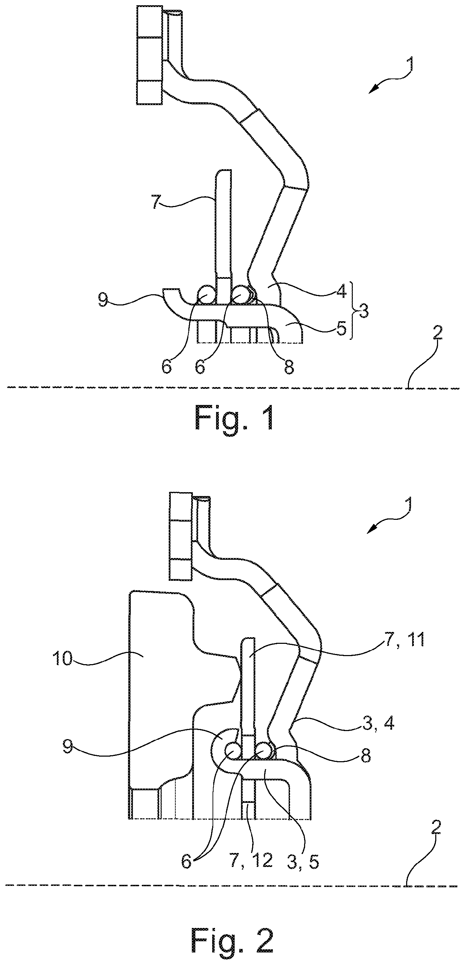

Die Figuren 1 bis 5 zeigen eine Deckelbaugruppe 1 gemäß einer ersten Ausführungsform der Erfindung. In der Fig. 1 ist die Deckelbaugruppe 1 in einer geschnittenen Ansicht parallel zu einer Axialrichtung bzw. Verlagerungsrichtung 2 zu sehen.

In der Fig. 1 ist ein Deckel 3 gezeigt. Der Deckel 3 ist ein Umformbauteil. Insbesondere sind ein Deckelabschnitt 4 und ein Halteabschnitt 5 gezeigt, welche beide einstückig mittels Blechumformung aus einem den Deckel 3 bildenden Blechteil gebildet sind. Radial außen an dem Halteabschnitt 5 sind zwei Drahtringe 6, eine Tellerfeder 7 und ein Federelement 8 angeordnet. Das Federelement 8 ist vorliegend zwischen dem deckelseitigen Drahtring 6 und dem Deckelabschnitt 4, also an einer der Tellerfeder 7 abgewandten Seite des in der Figur 1 rechten Drahtrings 6 angeordnet. Die Tellerfeder 7 ist ein Betätigungselement im Sinne des Anspruch 1.

Der Halteabschnitts 5 erstreckt sich im Wesentlichen in der Axialrichtung 2 weg von dem Deckelabschnitt 4. Die Fig. 1 zeigt die Deckelbaugruppe 1 vor einem (für die Belange dieser Erfindung letzten) umformenden Herstellungsschritt bzw. Umformschritt. Somit können die Drahtringe 6, das Federelement 8 und die Tellerfeder 7 leicht auf den Halteabschnitt 5 aufgeschoben werden. Ein distales Ende 9 des Halteabschnitts 5 ist bereits teilweise zu der Seite des Halteabschnitts 5 hin umgeformt, an welcher die Drahtringe 6 und das Federelement 8 an dem Halteabschnitt 5 anliegen.

In der Fig. 2 ist die Deckelbaugruppe 1 nach dem umformenden Herstellungsschritt gezeigt. Das distale Ende 9 ist dabei nach radial außen umgebogen und umgreift J-förmig den anpressplattenseitigen Drahtring 6. Zur Verdeutlichung ist in der Fig. 2 eine Anpressplatte 10 in Anlage mit der Tellerfeder 7 gezeigt.

Hieraus wird ersichtlich, dass die Tellerfeder 7 einen Kraftrand 11 an einem radial außen liegenden Ende/Bereich der Tellerfeder 7 hat, und dass die Tellerfeder 7 nach radial innen von dem Kraftrand 11 aus auskragende Tellerfederzungen 12 hat.

Durch den Umformschritt des distalen Endes 9 von Fig. 1 nach Fig. 2 ist das Federelement 8 vorgespannt. Aus der Darstellung der Fig. 1 ist ersichtlich, dass das Federelement vor dem Umformschritt diskontinuierlich gebogen ist. Genauer gesagt ist das Federelement 8 V-förmig gebogen. Dies ist eine plastische Umformung, welche vor der Montage an den Halteabschnitt 5 auf das Federelement aufgebracht wurde. Nach dem Umformschritt ist das Federelement 8 infolge einer elastischen Verformung kontinuierlich gebogen. Vorliegend zeigt das Federelement 8 nach dem Umformschritt einen C-förmigen Querschnitt.

Mit anderen Worten ausgedrückt weist das Federelement 8 in seinem entspannten bzw. nicht vorgespannten Zustand einen V-förmigen Querschnitt auf. Wenn das Federelement 8 mit dem Drahtring 6 in Anlage gebracht wird, gleiten im Zuge der Vorspannung durch plastische Verformung des Halteabschnitts 5, d.h. des distalen Endes 9 des Halteabschnitts 5, die beiden, den Winkel einschließenden Schenkel des V-förmigen Querschnitts des Federelements 8 an der Mantelfläche des Drahtrings 6 entlang, wobei der V-förmige in einen C-förmigen Querschnitt elastisch verformt wird derart, dass der C-förmige Querschnitt des Federelements 8 den Drahtring 6 teilweise umschließt und an dessen Mantelfläche anliegt.

Das Federelement 8 ist aus einem Federstahl gefertigt. Als Materialwahl sei hiermit beispielsweise (ohne einschränkend verstanden zu werden) vorgeschlagen, einen Stahl der Sorte C75S zu verwenden.

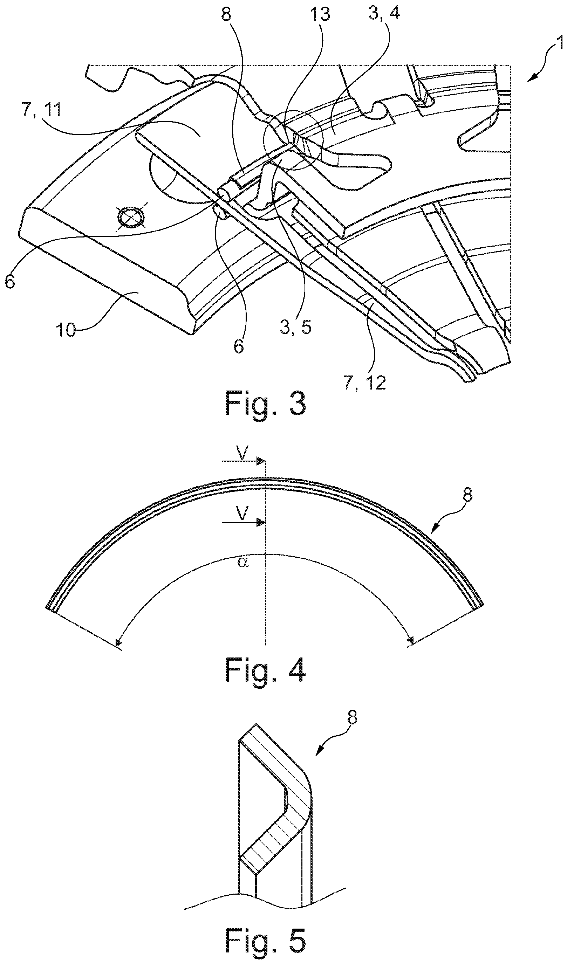

Zur Verdeutlichung der Anordnung gemäß der ersten Ausführungsform sei auf die Fig. 3 verwiesen. Aus der Fig. 3 ist ersichtlich, dass der Deckel 3 im Bereich einer Anlage des Federelements 8 und/oder eines Drahtrings 6 durch eine konvex-konkave Biegestelle 13 sowohl in axialer Richtung wie auch in radialer Richtung außen lagert.

Aus der Fig. 3 ist auch ersichtlich, dass der Übergang von den Tellerfederzungen 12 auf den Kraftrand 11 bevorzugt, aber nicht zwingend, radial im Bereich der Drahtringe 6 und des Federelements 8 oder radial außerhalb dieses Bereichs gebildet ist. Dies ermöglicht eine einfache Monatage. Die Drahtringe 6 bilden ein Schwenklager der Tellerfeder 7. Das heißt, dass die Tellerfeder 7 auf eine Betätigung hin um die Drahtringe 6 herum schwenkend verbiegbar ist. Genauer gesagt sind die Drahtringe 6 bei Betrachtung ihres Querschnitts mit einer Abwälzgeometrie gebildet.

Die Fig. 4 und Fig. 5 zeigen eine vergrößerte Darstellung des Federelements 8. Dabei ist die Darstellung der Fig. 5 eine quer geschnittene Ansicht an der in Fig. 4 mit V-V gekennzeichneten Stelle. Aus der Fig. 4 kann man erkennen, dass eine bevorzugte Ausgestaltung des Federelements 8 das Federelement 8 nicht als geschlossenen Ring, sondern als Kreisringsegment gebildet vorsieht, das heißt als Kreisringsegment in Umfangsrichtung um die vorgesehene Axialrichtung 2 herum gebildet vorsieht. Der Winkel, über welchen sich das Kreisringsegment erstreckt, ist in der Fig. 4 mit α bezeichnet. Beispielsweise kann der Winkel α 120° betragen. Genauer gesagt, wird in der ersten Ausführungsform vorgeschlagen, dass der Winkel α näherungsweise 120° beträgt, das heißt, es wird vorgeschlagen, dass der Winkel α etwas weniger als 120° beträgt, so dass drei Kreisringsegmente ohne Übermaß zu einem Kreis gefügt werden können.

Aus der Fig. 5 ist besonders deutlich die diskontinuierlich gebogene Form des Federelements 8 vor der elastischen Verformung zu erkennen. Das heißt, dass das Federelement 8 im Querschnitt zwei Schenkelabschnitte und dazwischen einen Winkelabschnitt aufweist. Hierfür sollen zwei exemplarische Herstellungsprozesse umschrieben werden. Gemäß einem ersten Herstellungprozeß kann das Federelement 8 mittels Laserschneiden aus einem Flachmaterial herausgetrennt werden. Als nächstes erfolgt ein Umformschritt, um die diskontinuierliche Form zu erreichen. Danach empfiehlt es sich, das Federelement 8 spannungsarm zu glühen, ehe ein Zusammenbau in dem Kupplungsdeckel erfolgt. Gemäß einem zweiten Herstellungsverfahren wird das Federelement 8 mittels eines Stanz- und Umformschrittes in einem Schritt und mit einem Werkzeug gebildet. Dieses Verfahren eignet sich daher besonders gut für eine Serien- oder Großserienproduktion. Als nächstes empfiehlt es sich auch hier, das Federelement 8 spannungsarm zu glühen, ehe ein Zusammenbau in oder an dem Kupplungsdeckel 3 erfolgt. Diese Herstellungsprozesse sind weder einschränkend zu verstehen, noch zwingend vollständig. So können beispielseise Oberflächenbehandlungen davor, dazwischen, dabei oder danach erfolgen.

Schließlich liegt ein Betriebszustand vor, in welchem das Federelement aufgrund des Umformschrittes seine Form von der V-Form in die C-Form geändert hat, das heißt vonn einer diskontinuierlich gebogenen Form in eine kontinuierlich gebogene Form geändert hat. Somit liegt das Federelement 8 mit einer elastischen Verformung vor. Aufgrund dieser elastischen Verformung übt das Federelement 8 auf die Drahtringe 6 und die Tellerfeder 7 eine elastische Kraft aus. Das Federelement 8 spannt also die Drahtringe 6 und die Tellerfeder 7 in Axialrichtung bzw. in Verlagerungsrichtung der Anpressplatte 10 vor. Somit ist sichergestellt, dass die Vorspannkraft auch mit zunehmender Fahrleistung und/oder mit zunehmender Anzahl an Kupplungsbetätigungen gewährleistet ist.

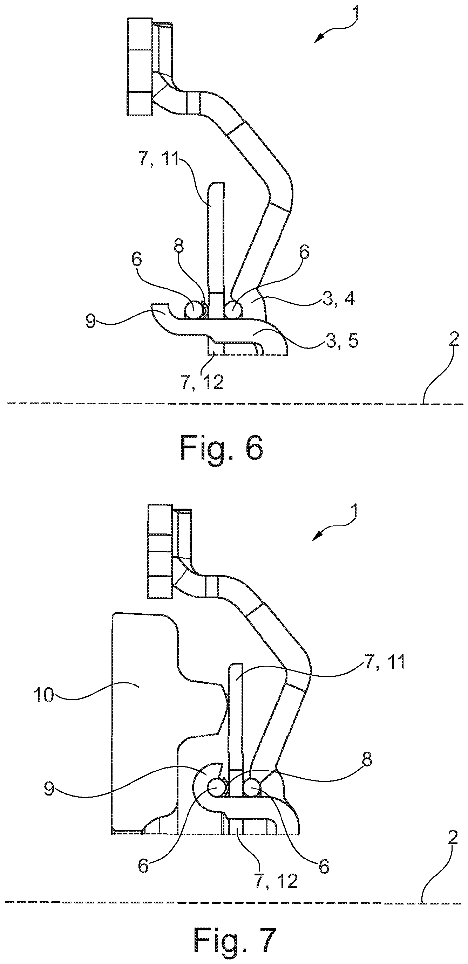

Eine zweite Ausführungsform der Erfindung wird kurz anhand der Figuren 6 bis 8 beschrieben. Dabei wird nur auf die Unterschiede der zweiten Ausführungsform gegenüber der ersten Ausführungsform eingegangen. Die zweite Ausführungsform einer Deckelbaugruppe 1 sieht vor, dass das Federelement an einer der Tellerfeder 7 bzw. dem Betätigungselement 7 zugewandten Seite eines Drahtringes 6 vorgesehen ist. Im Vergleich der Fig. 6 mit der Fig. 7 erkennt man wieder den Umformschritt, mit welchem das distale Ende 9 des Halteabschnitts 5 J-förmig nach radial außen umgebogen wurde. Es sei an dieser Stelle angemerkt, dass es nicht zwingend notwendig ist, dass die Drahtringe 6 und das Federelement 8 radial außen an dem Halteabschnitt 5 vorgesehen ist. Es kann genauso gut vorgesehen sein, dass die Drahtringe 6 und das Federelement 8 radial innen an dem Halteabschnitt 5 vorgesehen sind. Es empfiehlt sich jedoch, das distale Ende 9 zu derjenigen Seite hin umzubiegen, an welcher die Drahtringe 6 und das Federelement 8 vorgesehen sind, um diese zu halten und um die Vorspannung auf das Federelement 8 aufzubringen.

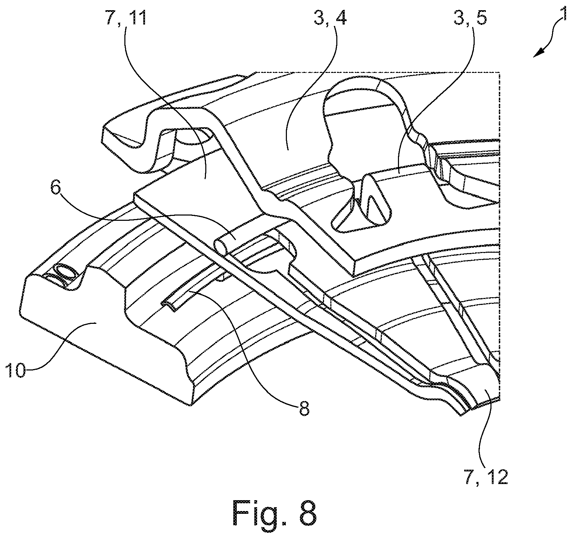

Die Fig. 8 zeigt wieder eine teilweise ausgebrochene perspektivische Darstellung der zweiten Ausführungsform der Deckelbaugruppe 1.

Es sei abschließend angemerkt, dass die Erfindung jede mögliche Reihenfolge von zumindest einem Drahtring 6, dem Federelement 8 und der Tellerfeder 7 in axialer Richtung anpressplattenseitig an dem Deckel 3 vorsieht. Jedoch wird bevorzugt, zwei Drahtringe 6 zum Zwecke einer bidirektional wirkenden Abwälzgeometrie des Schwenklagers, welches aus den Drahtringen 6 und dem Federelement 8 gebildet wird, vorzusehen. Die Reihenfolge, in welcher der zumindest eine Drahtring 6, das Federelement 8 und die Tellerfeder 7 angeordnet sind, kann beispielsweise nach dem Gesichtspunkt ausgewählt werden, welche Anordnung mit zunehmender Fahrleistung und mit zunehmendem Anteil an Kupplungsbetätigungen die in Axialrichtung 2 geringste Verlagerung der Tellerfeder 7 verspricht, um so eine möglichst gleichmäßige maximale Betätigungskraft zu erreichen.

Die vorangegangenen Ausführungsbeispiele betreffen eine Deckelbaugruppe 1 für eine Kupplung für ein Kraftfahrzeug, mit einem Betätigungselement 7, wie einer Tellerfeder, das zum In-Kontakt-Gelangen mit einer Anpressplatte 10 vorbereitet ist, wobei das Betätigungselement 7 über wenigstens einen Drahtring 6 mit einem Deckel 3 in Anlage ist, wobei zumindest ein Federelement 8, dessen Querschnitt im entspannten Zustand im Wesentlichen V-förmig und im vorgespannten Zustand im Wesentlichen C-förmig ist, zur Vorspannung des Drahtrings 6 in axialer Richtung auf dem Drahtring 6 aufliegt derart, dass während der Vorspannung Schenkel des im Wesentlichen V-förmigen Querschnitts bei der Überführung in den im Wesentlichen C-förmigen Querschnitt an einer Mantelfläche des Drahtrings 6 entlang gleiten.

### Bezugszeichenliste

- 1: Deckelbaugruppe
- 2: Axialrichtung
- 3: Deckel
- 4: Deckelabschnitt
- 5: Halteabschnitt
- 6: Drahtring
- 7: Tellerfeder
- 8: Federelement
- 9: distales Ende
- 10: Anpressplatte
- 11: Kraftrand
- 12: Tellerfederzunge
- 13: konvex-konkaver Abschnitt

## Patentansprüche

1. Deckelbaugruppe (1) für eine Kupplung für ein Kraftfahrzeug, mit einem Betätigungselement (7), wie einer Tellerfeder, das zum In-Kontakt-Gelangen mit einer Anpressplatte (10) vorbereitet ist, wobei das Betätigungselement (7) über wenigstens einen Drahtring (6) mit einem Deckel (3) in Anlage ist, wobei zumindest ein Federelement (8) vorgesehen ist, **dadurch gekennzeichnet, dass** der Querschnitt des Federelements (8) im entspannten Zustand im Wesentlichen V-förmig und im vorgespannten Zustand im Wesentlichen C-förmig ist, und das Federelement (8) zur Vorspannung des Drahtrings (6) in axialer Richtung auf dem Drahtring (6) aufliegt derart, dass während der Vorspannung Schenkel des im Wesentlichen V-förmigen Querschnitts bei der Überführung in den im Wesentlichen C-förmigen Querschnitt an einer Mantelfläche des Drahtrings (6) entlang gleiten.

2. Deckelbaugruppe (1) nach Anspruch 1, wobei das Federelement (8) an einer dem Betätigungselement (7) zugewandten Seite des Drahtrings (6) vorgesehen ist.

3. Deckelbaugruppe (1) nach Anspruch 1 oder 2, wobei das oder ein weiteres Federelement (8) an einer dem Betätigungselement (7) abgewandten Seite des Drahtrings (6) vorgesehen ist.

4. Deckelbaugruppe (1) nach einem der voranstehenden Ansprüche, wobei an dem Deckel (3) ein Halteteil (5) gebildet ist, welches das Betätigungselement (7), den zumindest einen Drahtring (6) und das zumindest eine Federelement (8) anpressplattenseitig in axialer Richtung an dem Deckel (3) fixiert.

5. Deckelbaugruppe (1) nach Anspruch 4, wobei das Halteteil (5) mittels Blechumformung einstückig aus dem Deckel (3) gebildet ist, wobei das Federelement (8) durch Umformen des Halteteils (5) vorgespannt ist.

6. Deckelbaugruppe (1) nach einem der voranstehenden Ansprüche, wobei in Umfangsrichtung mehrere Federelemente (8) verteilt sind, welche sich jeweils über einen Winkel zwischen näherungsweise 90° und näherungsweise 180° erstrecken.

7. Deckelbaugruppe (1) nach einem der voranstehenden Ansprüche, wobei der Drahtring (6) und ein zweiter Drahtring (6) ein Schwenklager des Betätigungselements (7) bilden.

8. Kupplung mit einer Deckelbaugruppe (1) nach einem der voranstehenden Ansprüche, sowie mit einer Druckplatte, einer axial verlagerbaren Kupplungsscheibe und einer Anpressplatte (10), die zum Klemmen der Kupplungsscheibe mit der Druckplatte durch das Betätigungselement (7) axial verlagerbar ist.

## Claims

1. Cover assembly (1) for a clutch for a motor vehicle, having an actuating element (7), such as a cup spring, which is set up for coming into contact with a pressure plate (10), the actuating element (7) bearing against a cover (3) via at least one wire ring (6), at least one spring element (8) being provided, **characterized in that** the cross section of the spring element (8) is substantially V-shaped in the relieved state and is substantially C-shaped in the prestressed state, and, in order to prestress the wire ring (6) in the axial direction, the spring element (8) lies on the wire ring (6) in such a way that, during the prestressing, limbs of the substantially V-shaped cross section slide along a shell face of the wire ring (6) in the case of the transfer into the substantially C-shaped cross section.

2. Cover assembly (1) according to Claim 1, the spring element (8) being provided on a side of the wire ring (6), which side faces the actuating element (7).

3. Cover assembly (1) according to Claim 1 or 2, the or a further spring element (8) being provided on a side of the wire ring (6), which side faces away from the actuating element (7).

4. Cover assembly (1) according to one of the preceding claims, a retaining part (5) being formed on the cover (3), which retaining part (5) fixes the actuating element (7), the at least one wire ring (6) and the at least one spring element (8) on the cover (3) in the axial direction on the pressure plate side.

5. Cover assembly (1) according to Claim 4, the retaining part (5) being formed in one piece from the cover (3) by means of sheet metal forming, the spring element (8) being prestressed by way of forming of the retaining part (5).

6. Cover assembly (1) according to one of the preceding claims, a plurality of spring elements (8) being distributed in the circumferential direction, which spring elements (8) extend in each case over an angle of between approximately 90° and approximately 180°.

7. Cover assembly (1) according to one of the preceding claims, the wire ring (6) and a second wire ring (6) forming a pivoting bearing of the actuating element (7).

8. Clutch having a cover assembly (1) according to one of the preceding claims, and having a pressing plate, an axially movable clutch disc and a pressure plate (10) which can be moved axially by way of the actuating element (7) in order to clamp the clutch disc with the pressing plate.

## Revendications

1. Ensemble de couvercle (1) pour un embrayage pour un véhicule automobile, avec un élément d'actionnement (7), comme une rondelle élastique, qui est préparée pour une mise en contact avec un plateau de pression (10), dans lequel l'élément d'actionnement (7) s'applique par au moins une couronne métallique (6) sur un couvercle (3), dans lequel il est prévu au moins un élément de ressort (8), **caractérisé en ce que** la section transversale de l'élément de ressort (8) dans l'état détendu est sensiblement en forme de V et dans l'état précontraint est sensiblement en forme de C, et l'élément de ressort (8) s'applique en direction axiale sur la couronne métallique (6) pour la précontrainte de la couronne métallique (6), de telle manière que pendant la précontrainte des branches de la section transversale sensiblement en forme de V glissent le long d'une surface latérale de la couronne métallique (6) lors de la déformation à la section transversale sensiblement en forme de C.

2. Ensemble de couvercle (1) selon la revendication 1, dans lequel l'élément de ressort (8) est prévu sur un côté de la couronne métallique (6) tourné vers l'élément d'actionnement (7).

3. Ensemble de couvercle (1) selon la revendication 1 ou 2, dans lequel le ou un autre élément de ressort (8) est prévu sur un côté de la couronne métallique (6) détourné de l'élément d'actionnement (7).

4. Ensemble de couvercle (1) selon l'une quelconque des revendications précédentes, dans lequel une partie de maintien (5) est formée sur le couvercle (3), laquelle fixe l'élément d'actionnement (7), ladite au moins une couronne métallique (6) et ledit au moins un élément de ressort (8) côté plateau de pression en direction axiale sur le couvercle (3).

5. Ensemble de couvercle (1) selon la revendication 4, dans lequel la partie de maintien (5) est formée en une seule pièce hors du couvercle (3) par déformation de tôle, dans lequel l'élément de ressort (8) est précontraint par déformation de la partie de maintien (5) .

6. Ensemble de couvercle (1) selon l'une quelconque des revendications précédentes, dans lequel plusieurs éléments de ressort (8) sont répartis en direction périphérique, et s'étendent respectivement sur un angle compris entre environ 90° et environ 180°.

7. Ensemble de couvercle (1) selon l'une quelconque des revendications précédentes, dans lequel la couronne métallique (6) et une deuxième couronne métallique (6) forment un palier pivotant de l'élément d'actionnement (7) .

8. Embrayage avec un ensemble de couvercle (1) selon l'une quelconque des revendications précédentes, ainsi qu'avec une plaque de pression, un disque d'embrayage déplaçable axialement et un plateau de pression (10), qui est déplaçable axialement au moyen de l'élément d'actionnement (7) pour le serrage du disque d'embrayage avec la plaque de pression.
